# EUROPÄISCHE PATENTSCHRIFT

(11) **EP 3 560 162 B1**
(45) Veröffentlichungstag und Bekanntmachung des Hinweises auf die Patenterteilung: **16.09.2020**
(21) Anmeldenummer: 17822283.2
(22) Anmeldetag: 20.12.2017
(51) Int. Cl.: H04L 29/06

(54) **VERFAHREN ZUM BETREIBEN EINER KOLLABORATIONS- UND KOMMUNIKATIONS-PLATTFORM UND KOLLABORATIONS- UND KOMMUNIKATIONS-PLATTFORM**
METHOD FOR OPERATING A COLLABORATION AND COMMUNICATION PLATFORM, AND COLLABORATION AND COMMUNICATION PLATFORM
PROCÉDÉ DE FONCTIONNEMENT D'UNE PLATEFORME DE COLLABORATION ET DE COMMUNICATION ET PLATEFORME DE COLLABORATION ET DE COMMUNICATION

(30) Priorität: 22.12.2016 DE 102016125345
(43) Veröffentlichungstag der Anmeldung: 30.10.2019
(73) Patentinhaber: Unify Patente GmbH & Co. KG, 80807 München (DE)
(72) Erfinder: SCHMITZ, Ulrich, 52146 Würselen (DE)
(74) Vertreter: Fritzsche, Thomas
(86) Internationale Anmeldenummer: PCT/EP2017/083956
(87) Internationale Veröffentlichungsnummer: WO 2018/115206

(56) Entgegenhaltungen:
- WO-A1-2014/190094
- US-A1- 2016 149 836

## Beschreibung

Die Erfindung betrifft ein Verfahren zum Betreiben einer Kollaborations- und Kommunikations-Plattform sowie eine entsprechende Kollaborations- und Kommunikations-Plattform.

Ein gattungsgemäßes Verfahren beziehungsweise eine gattungsgemäße Kollaborations- und Kommunikations-Plattform sind aus der US 2016/149836 A1 bekannt.

Die WO 2014/190094 A1 ist mit dem modularen Aufbau eines virtuellen RTC-Clients befasst.

Im Stand der Technik sind Cloud-basierte Kollaborations- und Kommunikations-Plattformen beispielsweise für die Kommunikation und Zusammenarbeit von Teams in Unternehmen bekannt, über welche Nutzer unter anderem Echtzeit-Konferenzen durchführen können. Um interaktives Audio- und Video-Streaming als auch Desksharing zu ermöglichen, verwenden derartige Kollaborations- und Kommunikations-Plattformen üblicherweise Media-Access-Control-(MAC)-Knoten (Media-Hubs), über welche ein großer Anteil des Echtzeit-/Media-Datenverkehrs abgewickelt wird. Da MAC-Knoten sowohl Web Real-Time Communication (WebRTC / Web-Echtzeitkommunikation) als auch Session Initiation Protocol (SIP) unterstützen, ist der hierüber abgewickelte Datenverkehr enorm hoch und es entstehen sogenannte Hotspots im Netzwerk hinsichtlich der Bandbreitennutzung.

Allerdings ist die Bandbreite im öffentlichen Internet allgemein teurer als beispielsweise in einem innerbetrieblichen Intranet. Hinzu kommt, dass der Anteil an innerbetrieblichem Intranet-Kommunikationen üblicherweise höher ist als der Anteil z. B. von einer Netzwerk-Domain zu einer weiteren Netzwerk-Domain über das öffentliche Internet.

Daher ist es insbesondere für große Unternehmensnetzwerk-Betreiber, welche die oben erwähnten Cloud-Lösungen verwenden, oder für Telekommunikationsanbieter, welche die Cloud-Lösungen weiterverkaufen, wichtig, weitestgehend ihre eigenen Verkehrsnetze und/oder Datenzentren für derartigen Datenverkehr, also insbesondere Audio- und/oder Video-Streaming und/oder Desksharing, zu nutzen, um kosteneffizient zu arbeiten.

Daher liegt der vorliegenden Erfindung die Aufgabe zugrunde, ein Verfahren zum Betreiben einer Kollaborations- und Kommunikations-Plattform sowie eine entsprechende Kollaborations- und Kommunikations-Plattform bereitzustellen, bei welchen der Datenverkehr über das Internet und so hiermit verbundene Kosten reduziert werden können.

Diese Aufgabe wird erfindungsgemäß durch ein Verfahren zum Betreiben einer Kollaborations- und Kommunikations-Plattform mit den Merkmalen gemäß Anspruchs 1 sowie eine Kollaborations- und Kommunikations-Plattform mit den Merkmalen gemäß Anspruch 11 gelöst. Bevorzugte Weiterbildungen sind in den jeweiligen abhängigen Ansprüchen definiert.

Erfindungsgemäß wird somit ein Verfahren zum Betreiben einer Kollaborations- und Kommunikations-Plattform mit einem Web-RTC-basierten Cloud-Service bereitgestellt, welcher durch ein in einer ersten Cloud bereitgestelltes erstes Netzwerksystem mit zumindest einem Zugangsknoten (ACC), einem Applikationsknoten (APP), einem ersten Media-Access-Control-Knoten (MAC) und zumindest einen Speicherknoten betrieben wird, wobei das Verfahren die folgenden Schritte umfasst: Bereitstellen eines zweiten MAC-Knotens für ein zweites Netzwerksystem eines Service Providers, welches mit dem ersten Netzwerksystem über einen sicheren Link (wie einen HTTPS-Link (Hypertext Transfer Protocol Secure)) verbunden ist, Ausführen aller von dem Service Provider bereitgestellten RTC- und Mediendienste über den zweiten MAC-Knoten, und Speichern aller Nutzer-sensitiven Daten des Service Providers des zweiten Netzwerksystems in dem zumindest einen Speicherknoten des ersten Netzwerksystems. Durch die erfindungsgemäße Verfahrenskonfiguration ist es möglich, Kosten für Bandbreite zu reduzieren bzw. den Datenverkehr über das Internet vorteilhafterweise einzuschränken, da hierdurch ermöglicht wird, den Internet-Datenverkehr auf im Hinblick auf Datenverkehr kostengünstigere interne Netzwerksysteme von Service Providern zu verlagern. Hierzu wird erfindungsgemäß dem Service Provider ein eigener zweiter MAC-Knoten bereitgestellt, über welchen dieser dann Echtzeit-Audio- und/oder Video- sowie Shared-Desktop-Streams abgewickelt werden können. Dem Service Provider, der diesen zweiten MAC-Knoten in seinem eigenen Netzwerk betreibt, ist es somit möglich, seinen Kunden Telekommunikationsdienste direkt von seinem eigenen Netzwerk aus anzubieten, so dass nicht jegliche von ihm angebotenen Dienste und die damit verbundenen Datenströme zuvor noch über den zentralen ersten MAC-Knoten der Kommunikations- und Kollaborations-Plattform laufen müssen. Der Datenverkehr über den MAC-Knoten der Kommunikations- und Kollaborations-Plattform kann dadurch erheblich verringert werden. Da der zweite WebRTC-(MAC)-Knoten in dem Datenzentrum des Service Providers gehostet wird, können die Kosten erheblich reduziert werden. Die erfindungsgemäße Lösung, welche somit derart gestaltet ist, dass die Kommunikations- und Kollaborations-Plattform alle SaaS (Software as a Service)-Komponenten hostet und betreibt, wohingegen der Service Provider alle PaaS-(Platform as a Service)-Komponenten für den MAC-Knoten (WebRTC und Media) hostet und betreibt, ist sowohl für die Seite des Anbieters oder Betreibers der Kommunikations- und Kollaborations-Plattform als auch für den Service Provider, der diese Plattform nutzt, vorteilhaft. Eine High-Level-Architektur mit den oben beschriebenen Vorteilen wird somit durch das erfindungsgemäße Verfahren ermöglicht.

Gemäß einer bevorzugten Ausführungsform ist das zweite Netzwerksystem ein Datenzentrum des Service Providers.

Gemäß einer weiteren bevorzugten Ausführungsform wird der zweite MAC-Knoten durch das Datenzentrum des Service Providers gehostet und betrieben.

Vorzugsweise sind die von dem Service Provider bereitgestellten RTC- und Mediendienste SIP- und WebRTC-basierten Echtzeit-Audio- und/oder Video- und/oder Shared-Desktop-Streams. Bevorzugt ist auch, wenn der zweite MAC-Knoten ein WebRTC-Media-Hub für bidirektionale Echtzeit-Audio und/oder Video-Streams und/oder Shared-Desktop-Umgebungen ist.

Gemäß noch einer weiteren bevorzugten Ausführungsform werden auf der Kollaborations- und Kommunikations-Plattform Mediendienste und RTC-Dienste angeboten, insbesondere zum Einrichten von Echtzeit-Konferenzen für Audio- und/oder Video-Desktops.

Vorzugsweise bietet der Service Provider des zweiten Netzwerksystems die Mediendienste und RTC-Dienste der Kollaborations- und Kommunikations-Plattform an.

Darüber hinaus ist es vorteilhaft, wenn der zweite MAC-Knoten authentifiziert und autorisiert wird, bevor er in dem ersten Netzwerksystem registriert wird, so dass Sicherheitsaspekte berücksichtigt werden.

Vorzugsweise ist der zweite MAC-Knoten mit dem Zugangsknoten des ersten Netzwerksystems über den sicheren Link verbunden.

Der zweite MAC-Knoten kann mit dem ersten MAC-Knoten über den Zugangsknoten und den zumindest einen APP-Knoten des ersten Netzwerksystems verbunden sein.

Weiterhin wird gemäß der Erfindung eine Kollaborations- und Kommunikations-Plattform mit einem Web-RTC-basierten Cloud-Service bereitgestellt, welcher ein erstes Netzwerksystem mit zumindest einem Zugangsknoten ACC, zumindest einem Applikationsknoten APP, zumindest einem ersten Media-Access-Control-Knoten MAC und zumindest einem Speicherknoten umfasst und durch das in einer ersten Cloud bereitgestellte erste Netzwerksystem mit dem zumindest einen Zugangsknoten ACC, dem zumindest einen Applikationsknoten APP, dem zumindest einen ersten Media-Access-Control-Knoten MAC und dem zumindest einen Speicherknoten betreibbar ist, wobei die Kollaborations- und Kommunikations-Plattform umfasst: ein zweites Netzwerksystem mit zumindest einem zweiten MAC-Knoten eines Service Providers, welches mit dem ersten Netzwerksystem über einen sicheren Link, insbesondere einen HTTPS-Link, verbindbar ist, wobei der zweite MAC-Knoten ausgestaltet ist, alle von dem Service Provider bereitgestellten RTC- und Mediendienste über ihn auszuführen, und wobei der zumindest eine Speicherknoten ausgestaltet ist, alle Nutzer-sensitiven Daten des Service Providers des zweiten Netzwerksystems in dem ersten Netzwerksystem zu speichern. Die Kollaborations- und Kommunikations-Plattform ist zum Ausführen des oben beschriebenen Verfahrens ausgebildet und bietet die oben bereits ausgeführten Vorteile.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale verschiedener Ausführungsbeispiele grundsätzlich stets miteinander kombiniert werden, und die Kombination kann ebenfalls als Ausführungsbeispiel der Erfindung verstanden werden.

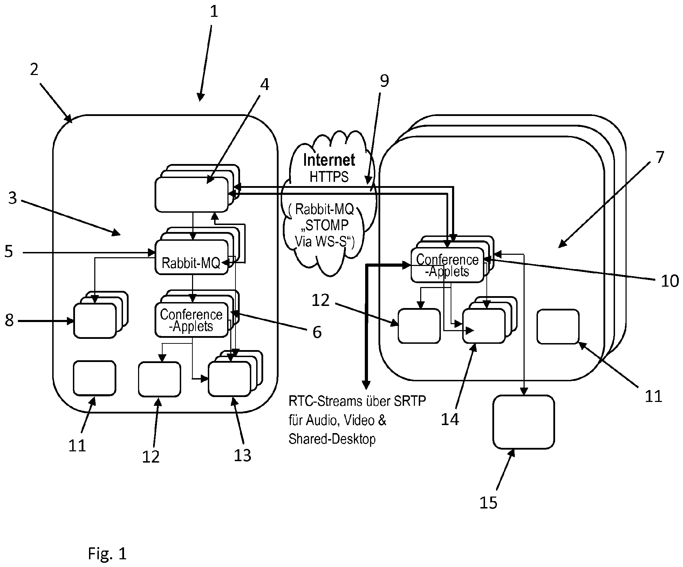

Im Folgenden wird die Erfindung anhand bevorzugter Ausführungsbeispiele und mit Hilfe der Figur näher beschrieben. Dabei ist bzw. sind
- Fig. 1: eine schematische Darstellung einer Implementierung der High-Level-Architektur einer Kommunikations- und Kollaborations-Plattform gemäß einer Ausführungsform der Erfindung.

Fig. 1 ist eine schematische Darstellung einer Kommunikations- und Kollaborations-Plattform 1 mit einem Web-RTC-basierten Cloud-Service gemäß einer Ausführungsform der Erfindung. Der Web-RTC-basierte Cloud-Service wird in der hier dargestellten Ausführungsform durch ein in einer ersten Cloud 2 betriebenes erstes Netzwerksystem 3 bzw. erstes Datenzentrum betrieben. Das erste Netzwerksystem 3 umfasst verschiedene Typen von Knoten. Die wichtigen Knoten sind jedoch die Zugangsknoten (ACC) 4, die Applikationsknoten (APP) 5 und die ersten Media-Access-Control-(MAC)-Knoten 6. Weitere Knoten-Typen sind MGMT-Knoten 11 (MGTM steht für eine Management-Anwendung), OPER-Knoten 12 (OPER steht für Operational Knoten inklusive Bedienungsoberfläche) und zentrale ZOO-Knoten 13 (ZOO steht für zentrale Registrierungseinheit; hier werden Knoten und Dienste angemeldet inklusive deren Konfigurationsdaten). Die zentralen ZOO-Knoten 13 werden in dem unten noch näher beschriebenen zweiten Netzwerksystem 7 als Remote-ZOO-Knoten 14 entsprechend betrieben.

Hierbei werden alle Knoten-Typen innerhalb desselben Datenzentrums bereitgestellt und alle von einem einzigen Betreiber/Anbieter betrieben. Der MAC-Knoten 6 ist für alle bidirektionalen Echtzeit-Streams für Audio und/oder Video und/oder Shared-Desktop zuständig und unterstützt diese gemäß dem WebRTC-Standard sowie SIP-basiert.

Um den über den ersten MAC-Knoten 6 laufenden Datenverkehr zu reduzieren, wird ein zweiter MAC-Knoten 10 in einem Datenzentrum eines zweiten Netzwerksystems 7 bereitgestellt, welcher mit dem SIP Private Branch Exchange (PBX) oder einem SIP-Trunk oder IMS-System des Service Providers verbunden wird, welche in der Figur allgemein mit dem Bezugszeichen 15 gekennzeichnet sind. Dies kann entweder ein Datenzentrum eines öffentlichen Providers für Telekommunikationsdienste oder dergleichen sein oder aber auch ein privates Datenzentrum eines Unternehmens oder einer Organisation. Das Bereitstellen des zweiten MAC-Knotens 10 für ein der Kommunikations- und Kollaborations-Plattform 1 externes Netzwerk (hier das zweite Netzwerksystem 7) durch den die Kommunikations- und Kollaborations-Plattform 1 wird als örtlich bzw. räumlich getrenntes MAC-Modell (GEOseparated-MAC-model) bezeichnet. Hierbei wird nicht nur der zweite MAC-Knoten 10 sondern auch jegliche Einsatz- und Implementierungsinstruktionen an den Betreiber des Datenzentrums des zweiten Netzwerks 7 geliefert.

Wesentlich ist allerdings, dass alle Nutzer-sensitiven Daten (Konversationen, Nutzerdaten, etc.) weiterhin in den Speicherknoten 8 der ersten Cloud 2 der Kommunikations- und Kollaborations-Plattform 1 gespeichert werden und nicht ebenfalls ausgelagert werden. Der Service Provider des Datenzentrums des zweiten Netzwerksystems 7 hat keinerlei Zugriff auf diese Daten. Er ist nicht verantwortlich für die Datenspeicherung, außer eine Datenspeicherung in Bezug auf MAC-Konfigurationsdaten und RTC-Statistik-/Rückverfolgungs-Daten. Dagegen ist er jedoch verantwortlich für alle SIP- und WebRTC-basierten Echtzeit-Streams für Audio-, Video- und/oder Shared-Desktop. Hier wird also eine klare Arbeitsteilung, die für beide Seiten vorteilhaft ist, wie bereits ausgeführt, erzielt.

Die Verbindung über den Link 9 zwischen dem ersten Netzwerksystem 2 und dem zweiten Netzwerksystem 7 ist eine sichere HTTPS-Verbindung. "Ausgelagerte" bzw. örtlich von der ersten Cloud 2 getrennte zweite MACs 10 müssen authentifiziert und autorisiert werden, bevor sie registriert werden können. Der Link 9 zwischen dem zweiten MAC 10 und der ersten Cloud 2 verarbeitet hauptsächlich Sitzungs- und Signalisierungs-Details (wie "create RTC session"; "add/remove/change parties with RTC session", etc.). Gemäß der hier dargestellten Konfiguration wird erreicht, dass der Netzwerkdatenverkehr zwischen der ersten Cloud 2 und dem zweiten MAC 10 weitaus geringer ist als der RTC-Stream-Datenverkehr über Secure Realtime Transport Protocol (SRTP).

Beispielsweise registrieren Betreiber von ausgelagerten GEO-MACs entsprechend dem hier beispielhaft dargestellten und beschriebenen zweiten MAC 10 1 ... N Tenants ("Mieter") innerhalb der ersten Cloud 2. Für diese Tenants werden alle RTC-Sitzungen auf dem ausgelagerten zweiten MAC 10 (GEO-MAC) aktiviert anstatt innerhalb der ersten Cloud 2. Vorteilhaft ist zudem, dass, wenn die ausgelagerten zweiten MACs 10 außer Betrieb sind (beispielsweise zu Wartungszwecken oder während Updates), die erste Cloud 2 die lokalen zweiten MACs 10 auch als eine Fallback-Instanz nutzen könnte. Vorteilhaft ist weiterhin, dass Betreiber der Datenzentren der zweiten oder weiteren Netzwerke 7 hierdurch in der Lage sind, Nutzerkonten oder andere Applikationsdienste für ihre Tenants anzubieten und zu verkaufen und sie diese in eigener Regie verwalten können, so dass auch hier Kosten gespart werden können.

Die oben beschriebenen und weitere Aspekte, die die Kommunikations- und Kollaborations-Plattform bietet, sind im Folgenden nochmals zusammengefasst aufgelistet. Es werden von der ersten Cloud 2 örtlich/räumlich getrennte zweiten MAC-Knoten 10 geographisch verteilt und geographisch getrennt von dem Applikations-Knoten 5 vorgesehen, welcher die Businesslogik primär im Hinblick auf Signalisierung und Content-Verteilung hostet. Die räumlich/örtlich getrennten zweiten MAC-Knoten 2 müssen authentifiziert und autorisiert werden, bevor sie registriert werden. Hierdurch sind beispielsweise auch umsatzbeteiligte Nutzer-Lizenzen zwischen dem Anbieter/Betreiber der Kommunikations- und Kollaborations-Plattform 1, welcher die Echtzeit-Kollaborations-Applikation betreibt, und dem Telekommunikationsanbieter, welcher die zweiten MAC-Knoten 10 betreibt, realisierbar. Andererseits können auch getrennte MAC-Lizenzen pro angemeldetem Knoten vergeben werden oder Lizenzen pro angemeldetem MAC-Knoten-Diensten oder Features, wie beispielsweise Aufzeichnen, Transkription, SIP- und/oder Codec-Zusammenarbeit. Ferner können Sitzungen oder Transaktionen realisiert werden, welche pro Nutzung zahlbar bzw. abrechenbar sind. Auch werden SLA-basierte Fallback-Lösungen im Fall von einem Ausfall des ersten MAC-Knotens 6der ersten Cloud 1 ermöglicht und es wird auch die Möglichkeit eröffnet, dass Betreiber separate MAC-Knoten pro Tenant basierend auf SLA bereitstellen können. Die für all diese Konzepte erforderliche Knoten-Struktur bzw. Verteilung wird erfindungsgemäß bereitgestellt.

### Bezugszeichen

- 1: Kommunikations- und Kollaborations-Plattform
- 2: erste Cloud
- 3: erstes Netzwerksystem
- 4: Zugangsknoten
- 5: Applikationsknoten
- 6: erster MAC-Knoten
- 7: zweites Netzwerksystem
- 8: Speicherknoten
- 9: Link
- 10: zweiter MAC-Knoten
- 11: MGMT-Knoten
- 12: OPER-Knoten
- 13: zentrale ZOO-Knoten
- 14: Remote-ZOO-Knoten
- 15: SIP PBX / PBX Trunk / IMS-System

## Patentansprüche

1. Verfahren zum Betreiben einer Kollaborations- und Kommunikations-Plattform (1) mit einem Web-RTC-basierten Cloud-Service, welcher durch ein in einer ersten Cloud (2) bereitgestelltes erstes Netzwerksystem (3) mit zumindest einem Zugangsknoten ACC (4), zumindest einem Applikationsknoten APP (5), zumindest einem ersten Media-Access-Control-Knoten MAC (6) und zumindest einen Speicherknoten (8) betrieben wird, **dadurch gekennzeichnet, dass** das Verfahren die folgenden Schritte umfasst:
- Bereitstellen zumindest eines zweiten MAC-Knotens (10) eines Service Providers für ein zweites Netzwerksystem (7) des Service Providers, welches mit dem ersten Netzwerksystem (3) über einen sicheren Link (9) verbunden ist,
- Ausführen aller von dem Service Provider bereitgestellten RTC- und Mediendienste über den zweiten MAC-Knoten (10), und
- Speichern aller Nutzer-sensitiven Daten des Service Providers des zweiten Netzwerksystems (7) in dem zumindest einen Speicherknoten (8) des ersten Netzwerksystems (3).

2. Verfahren gemäß Anspruch 1, wobei das zweite Netzwerksystem (7) ein Datenzentrum des Service Providers ist.

3. Verfahren gemäß Anspruch 2, wobei der zweite MAC-Knoten (10) durch das Datenzentrum des Service Providers gehostet und betrieben wird.

4. Verfahren gemäß einem der Ansprüche 1 bis 3, wobei die von dem Service Provider bereitgestellten RTC- und Mediendienste SIP- und WebRTC-basierten Echtzeit-Audio- und/oder Video- und/oder Shared-Desktop-Streams sind, und wobei der zweite MAC-Knoten (10) ein WebRTC-Media Hub für bidirektionale Echtzeit-Audio und/oder Video- und/oder Shared-Desktop- Streams ist.

5. Verfahren gemäß einem der Ansprüche 1 bis 4, wobei auf der Kollaborations- und Kommunikations-Plattform (1) Mediendienste und RTC-Dienste angeboten werden, welche zum Einrichten von Echtzeit-Konferenzen für Audio- und/oder Video-Desktops dienen.

6. Verfahren gemäß einem der Ansprüche 1 bis 5, wobei der Service Provider des zweiten Netzwerksystems (7) die Mediendienste und RTC-Dienste der Kollaborations- und Kommunikations-Plattform (1) anbietet.

7. Verfahren gemäß einem der Ansprüche 1 bis 6, wobei der zweite MAC-Knoten (10) authentifiziert und autorisiert wird, bevor er in dem ersten Netzwerksystem (3) registriert wird.

8. Verfahren gemäß einem der Ansprüche 1 bis 7, wobei der zweite MAC-Knoten (10) mit dem Zugangsknoten (4) des ersten Netzwerksystems (3) verbunden ist.

9. Verfahren gemäß Anspruch 8, wobei der zweite MAC-Knoten (10) mit dem ersten MAC-Knoten (6) über den Zugangsknoten (4) und den zumindest einen Applikationsknoten (5) des ersten Netzwerksystems (3) verbunden ist.

10. Verfahren gemäß einem der Ansprüche 1 bis 9, wobei das zweite Netzwerksystem (7) über einen HTTPS-Link als sicheren Link mit dem ersten Netzwerksystem (3) verbunden ist.

11. Kollaborations- und Kommunikations-Plattform (1) mit einem in einer ersten Cloud (2) bereitgestellten ersten Netzwerksystem (3), das zumindest einen Zugangsknoten ACC (4), zumindest einen Applikationsknoten APP (5), zumindest einen ersten Media-Access-Control-Knoten MAC (6) und zumindest einen Speicherknoten (8) umfasst, wobei die Kollaborations- und Kommunikations-Plattform (1) für einen Web-RTC-basierten Cloud-Service ausgelegt ist, welcher durch das in der ersten Cloud (2) bereitgestellte erste Netzwerksystem (3) mit dem zumindest einen Zugangsknoten ACC (4), dem zumindest einen Applikationsknoten APP (5), dem zumindest einen ersten Media-Access-Control-Knoten MAC (6) und dem zumindest einen Speicherknoten (8) betreibbar ist, **dadurch gekennzeichnet, dass** die Kollaborations- und Kommunikations-Plattform (1) umfasst:
- ein zweites Netzwerksystem (7) mit zumindest einem zweiten MAC-Knoten (10) eines Service Providers, welches mit dem ersten Netzwerksystem (6) über einen sicheren Link (9) verbindbar ist, wobei der zweite MAC-Knoten (10) ausgestaltet ist, alle von dem Service Provider bereitgestellten RTC- und Mediendienste über ihn auszuführen, und wobei der zumindest eine Speicherknoten (8) ausgestaltet ist, alle Nutzer-sensitiven Daten des Service Providers des zweiten Netzwerksystems (7) in dem ersten Netzwerksystem (3) zu speichern.

## Claims

1. A method for operating a collaboration and communication platform (1) with a Web-RTC-based cloud service, which is operated through a first network system (3) provided in a first cloud (2) with at least one access (ACC) node (4), at least one application (APP) node (5), at least one first media access control (MAC) node (6), and at least one storage node (8), **characterized in that** the method comprises the following steps:
- providing at least one second MAC node (10), belonging to a service provider, for a second network system (7) belonging to the service provider, which is connected to the first network system (3) via a secure link (9),
- executing all RTC and media services supplied by the service provider via the second MAC node (10), and
- storing all user-sensitive data in the possession of the service provider supplying the second network system (7) in the at least one storage node (8) in the first network system (3).

2. The method as in claim 1, wherein the second network system (7) is a data center belonging to the service provider.

3. The method as in claim 2, wherein the second MAC node (10) is hosted and operated through the service provider's data center.

4. The method as in any one of claims 1 to 3, wherein the RTC and media services supplied by the service provider are SIP- and WebRTC-based real-time audio and/or video and/or shared desktop streams, and wherein the second MAC node (10) is a WebRTC media hub for bidirectional real-time audio and/or video and/or shared desktop streams.

5. The method as in any one of claims 1 to 4, wherein media services and RTC services used for setting up real-time conferences for audio and/or video desktops are provided on the collaboration and communication platform (1).

6. The method as in any one of claims 1 to 5, wherein the service provider supplying the second network system (7) provides the media services and RTC services for the collaboration and communication platform (1).

7. The method as in any one of claims 1 to 6, wherein the second MAC node (10) is authenticated and authorized before the second MAC node is registered in the first network system (3).

8. The method as in any one of claims 1 to 7, wherein the second MAC node (10) is connected to the access node (4) of the first network system (3).

9. The method as in claim 8, wherein the second MAC node (10) is connected to the first MAC node (6) via the access node (4) and the at least one application node (5) of the first network system (3).

10. The method as in any one of claims 1 to 9, wherein the second network system (7) is connected to the first network system (3) via a secure link in the form of an https link.

11. A collaboration and communication platform (1) having a first network system (3) provided in a first cloud (2), which comprises at least one access (ACC) node (4), at least one application (APP) node (5), at least one first media access control (MAC) node (6), and at least one storage node (8), wherein the collaboration and communication platform (1) is designed for a Web-RTC-based cloud service, which can be operated through the first network system (3) provided in the first cloud (2) with the at least one access (ACC) node (4), the at least one application (APP) node (5), the at least one first media access control (MAC) node (6), and the at least one storage node (8), **characterized in that** the collaboration and communication platform (1) comprises:
- a second network system (7) having at least one second MAC node (10) belonging to a service provider, which can be connected to the first network system (6) via a secure link (9), wherein the second MAC node (10) is configured such that all RTC and media services supplied by the service provider are executed via the second MAC node, and wherein the at least one storage node (8) is configured such that all user-sensitive data in the possession of the service provider supplying the second network system (7) is stored in the first network system (3).

## Revendications

1. Procédé de fonctionnement d'une plateforme de collaboration et de communication (1) avec un service en nuage basé sur WebRTC, lequel est exploité par un premier système de réseau (3) mis à disposition dans un premier nuage (2) avec au moins un nœud d'accès ACC (4), au moins un nœud d'application APP (5), au moins un premier nœud de contrôle d'accès au support MAC (6) et au moins un nœud de stockage (8), **caractérisé en ce que** le procédé comprend les étapes suivantes :
- mise à disposition d'au moins un deuxième nœud MAC (10) d'un fournisseur de services pour un deuxième système de réseau (7) du fournisseur de services, lequel est connecté au premier système de réseau (3) par le biais d'une liaison sécurisée (9),
- réalisation de tous les services RTC et de médias mis à disposition par le fournisseur de services par le biais du deuxième nœud MAC (10), et
- stockage de toutes les données sensibles de l'utilisateur du fournisseur de services du deuxième système de réseau (7) dans l'au moins un nœud de stockage (8) du premier système de réseau (3).

2. Procédé selon la revendication 1, dans lequel le deuxième système de réseau (7) est un centre de données du fournisseur de services.

3. Procédé selon la revendication 2, dans lequel le deuxième nœud MAC (10) est hébergé et exploité par le centre de données du fournisseur de services.

4. Procédé selon l'une quelconque des revendications 1 à 3, dans lequel les services RTC et de médias mis à disposition par le fournisseur de services sont des flux audio en temps réel basés sur SIP et WebRTC et/ou vidéo et/ou de bureau partagé, et dans lequel le deuxième nœud MAC (10) est un concentrateur de médias WebRTC pour des flux bidirectionnels audio en temps réel et/ou vidéo et/ou de bureau partagé.

5. Procédé selon l'une quelconque des revendications 1 à 4, dans lequel des services de médias et des services RTC sont proposés sur la plateforme de collaboration et de communication (1), lesquels servent à établir des conférences en temps réel pour des bureaux audio et/ou vidéo.

6. Procédé selon l'une quelconque des revendications 1 à 5, dans lequel le fournisseur de services du deuxième système de réseau (7) propose les services de médias et services RTC de la plateforme de collaboration et de communication (1).

7. Procédé selon l'une quelconque des revendications 1 à 6, dans lequel le deuxième nœud MAC (10) est authentifié et autorisé, avant qu'il soit enregistré dans le premier système de réseau (3).

8. Procédé selon l'une quelconque des revendications 1 à 7, dans lequel le deuxième nœud MAC (10) est connecté au nœud d'accès (4) du premier système de réseau (3).

9. Procédé selon la revendication 8, dans lequel le deuxième nœud MAC (10) est connecté au premier nœud MAC (6) par le biais du nœud d'accès (4) et de l'au moins un nœud d'application (5) du premier système de réseau (3).

10. Procédé selon l'une quelconque des revendications 1 à 9, dans lequel le deuxième système de réseau (7) est connecté au premier système de réseau (3) par le biais d'une liaison HTTPS en tant que liaison sécurisée.

11. Plateforme de collaboration et de communication (1) avec un premier système de réseau (3) mis à disposition dans un premier nuage (2), qui comprend au moins un nœud d'accès ACC (4), au moins un nœud d'application APP (5), au moins un premier nœud de contrôle d'accès au support MAC (6) et au moins un nœud de stockage (8), dans laquelle la plateforme de collaboration et de communication (1) est conçue pour un service en nuage basé sur WebRTC, lequel peut être exploité par le premier système de réseau (3) mis à disposition dans le premier nuage (2) avec l'au moins un nœud d'accès ACC (4), l'au moins un nœud d'application APP (5), l'au moins un premier nœud de contrôle d'accès au support MAC (6) et l'au moins un nœud de stockage (8), **caractérisée en ce que** la plateforme de collaboration et de communication (1) comprend :
- un deuxième système de réseau (7) avec au moins un deuxième nœud MAC (10) d'un fournisseur de services, lequel peut être connecté au premier système de réseau (6) par le biais d'une liaison sécurisée (9), dans laquelle le deuxième nœud MAC (10) est configuré pour réaliser tous les services RTC et de médias mis à disposition par le fournisseur de services par son biais, et dans laquelle l'au moins un nœud de stockage (8) est configuré pour stocker toutes les données sensibles de l'utilisateur du fournisseur de services du deuxième système de réseau (7) dans le premier système de réseau (3).
